# EUROPÄISCHE PATENTSCHRIFT

(11) **EP 1 036 780 B1**
(45) Veröffentlichungstag und Bekanntmachung des Hinweises auf die Patenterteilung: **15.01.2003**
(21) Anmeldenummer: 00112656.4
(22) Anmeldetag: 17.01.1996
(51) Int. Cl.: C04B 35/628, C04B 35/111, C04B 35/486

(54) **Keramische Pulver mit hydrophobierter Oberfläche sowie deren Herstellung und Verwendung**
Ceramic powders with hydrophobic surface, production and use thereof
Poudres céramiques à surface hydrophobe, leur fabrication et leur utilisation

(30) Priorität: 31.01.1995 DE 19502890; 16.12.1995 DE 19547183
(43) Veröffentlichungstag der Anmeldung: 20.09.2000
(62) Teilanmeldung aus: 96900277.3
(73) Patentinhaber: ROBERT BOSCH GMBH, 70442 Stuttgart (DE)
(72) Erfinder: Eisele, Ulrich, 70199 Stuttgart (DE); Weber, Lothar, 70499 Stuttgart (DE); Nass, Ruediger, 66292 Riegelsberg (DE)

(56) Entgegenhaltungen:
- EP-A- 0 354 896
- EP-A- 0 378 414
- EP-A- 0 588 171
- US-A- 5 001 091
- US-A- 5 145 719

## Beschreibung

### Stand der Technik

Es ist bekannt, daß Metalloxide auf ihrer Oberfläche in der Regel Hydroxylgruppen tragen. Das gilt besonders dann, wenn die Oxide in wässerigem Medium durch Fällung der Metallionen als Hydroxide oder Oxidhydrate und nachfolgende Dehydratisierung hergestellt wurden. Abhängig vom jeweiligen Metall, können die Metalloxide basischen, sauren oder amphoteren Charakter haben, d.h. die Hydroxidgruppen können Protonen abgeben und/oder anlagern. Durch Messung des pH einer wäßrigen Suspension des Oxids läßt sich der basische, saure oder amphotere Charakter eines Oxids feststellen. Die Menge der Hydroxidgruppen auf der Oberfläche läßt sich durch Säure/Base-Titration bestimmen.

Die Hydroxidgruppen verleihen den Oxiden einen mehr oder minder ausgeprägten hydrophilen Charakter. Bei der Herstellung von Dispersionen aus feinteiligen Oxiden treten die Hydroxidgruppen auf der Oberfläche eines bestimmten Oxidteilchens in attrahierende Wechselwirkung mit Hydroxidgruppen auf der Oberfläche benachbarter Teilchen und bewirken so einen gewissen Zusammenhalt der Teilchen, der zu Agglomerationen führt und somit die Dispergierbarkeit der Oxidteilchen herabmindert. Es ist bekannt, daß man diesem Effekt durch Zusatz von kationischen oder anionischen Dispergiermitteln entgegenwirken kann. Diese erzeugen auf der Oberfläche der Teilchen, abhängig vom jeweiligen Metall, positive oder negative Ladungen, die zwar in erwünschter Weise der Agglomeration entgegenwirken, aber zumindest bei sehr feinteiligen Dispersionen infolge der Coulomb'schen Abstoßung zu Abständen von Teilchen zu Teilchen führen, die an die Größenordnung der Teilchendurchmesser herankommen oder sogar größer sein können. Dadurch wird es schwierig oder unmöglich, die vielfach erwünschten Dispersionen mit sehr kleinen Teilchendurchmessern und trotzdem hohen Feststoffgehalten herzustellen.

### Vorteile der Erfindung

Durch die Erfindung werden keramische Pulver mit hydrophobierter Oberfläche geschaffen, die sich besonders zur Herstellung von stabilen Dispersionen (sogenannten keramischen Schlickern) mit sehr kleinen mittleren Teilchengrößen und hohem Feststoffgehalt eignen, wie sie für hochwertige, nach dem Sinterverfahren hergestellte Formkörper benötigt werden. Der Grund dafür liegt darin, daß die Teilchen infolge der sterischen Stabilisierung, die durch die Hydrophobierung nach der Erfindung bewirkt wird, einen gegenüber der elektrostatischen Stabilisierung mittels kationischer oder anionischer Dispergiermittel verminderten Platzbedarf haben. Daher lassen sich mit den hydrophobierten keramischen Pulvern nach der Erfindung stabile Dispersionen herstellen, die gegenüber elektrostatisch stabilisierten Dispersionen bei gleicher Viskosität einen höheren Feststoffgehalt oder bei gleichem Feststoffgehalt eine niedrigere Viskosität aufweisen. Extrem feine keramische Pulver lassen sich überhaupt nur zu vernünftig verarbeitbaren Dispersionen verarbeiten, wenn sie erfindungsmäß hydrophobiert werden.

Die Hydrophobierung von keramischen Pulvern unterschiedlichen Ursprungs führt zu einer Vergleichmäßigung der Eigenschaften, d.h. zur Maskierung oder Unterdrückung bestimmter herkunftsbedingter Charakteristika, die anderenfalls ein unterschiedliches Verhalten verursachen würden. Dadurch lassen sich keramische Pulver unterschiedlicher Herkunft und mit verschiedenen Eigenschaften in gleicher Weise verarbeiten. Die Prozeßführung bei der Weiterverarbeitung wird also unabhängig von den individuellen Eigenschaften der Rohstoffe.

Bei den getrockneten keramischen Grünkörpern führt die Hydrophobierung der Oberfläche der Pulverteilchen zu einer erhöhten Flexibilität, die für verschiedene Anwendungen erwünscht ist.

Weiterhin zeigen keramische Schlicker, die aus hydrophobierten keramischen Pulvern nach der Erfindung hergestellt wurden und daher sterisch stabilisiert sind, gegenüber elektrostatisch stabilisierten Schlickern unter sonst gleichen Bedingungen keine oder eine deutlich niedrigere Fließgrenze, was für die weitere Verarbeitung der Schlicker vorteilhaft ist.

### Beschreibung der Erfindung

Der wesentliche Gedanke der Erfindung besteht darin, keramische Pulver mit hydrophobierter Oberfläche zur Herstellung von Dispersionen mit mittleren Teilchengrößen im Mikrometer- und Nanometerbereich und mit hohem Feststoffgehalt zu verwenden, wodurch die geschilderten Vorteile erreicht werden. Diesem Gedanken entspricht Anspruch 7. Keramische Pulver nach den Ansprüchen 1 bis 3, die nach den Verfahren der Ansprüche 4 bis 6 hergestellt werden, sind für die Herstellung solcher Dispersionen besonders geeignet.

### 1. Die keramischen Pulver mit hydrophobierter Oberfläche

Die keramischen Pulver mit hydrophobierter Oberfläche gemäß der Erfindung bestehen aus Teilchen, die der Formel

P-(XR)ₘ I

entsprechen. In der Formel bedeutet P ein keramisches Pulverteilchen; R einen hydrophoben organischen Rest; X ein Brückenglied, das den hydrophoben organischen Rest R an das keramische Pulverteilchen KP bindet; und steht m für eine ganze Zahl >1.

### 1.1 Die keramischen Pulverteilchen P

Die keramischen Pulverteilchen P bestehen entweder (1) aus einem oxidischen keramischen Material mit oberflächlich gebundenen Hydroxidgruppen oder (2) aus einem nichtoxidischen keramischen Material, das jedoch eine oxidische Oberfläche mit Hydroxidgruppen aufweist. Die Materialien (2) können auch als nichtoxidische keramische Materialien mit Oxidhaut bezeichnet werden, womit jedoch nicht gesagt sein soll, daß diese Oxidhaut notwendigerweise zusammenhängend ist. Die oxidischen oder nichtoxidischen Materialien (1) und (2) werden als keramische Materialien bezeichnet, wenn sie sich bei hohen Temperaturen zu keramischen Körpern zusammensintern lassen.

Die oxidischen keramischen Materialien (1) leiten sich von ein- oder mehrwertigen Elementen ab, die Oxide mit basischem, saurem oder amphoterem Charakter bilden können, je nach dem, ob die auf der Oberfläche befindlichen Hydroxidgruppen dazu neigen, Protonen anzulagern oder abzugeben oder Protonen sowohl anzulagern als auch abzugeben vermögen. Es ist gut bekannt, welche Oxide basische, welche saure und welche amphotere Eigenschaften zeigen. Im Zweifelsfall kann der Charakter eines Oxids durch Messung des pH einer wäßrigen Aufschlämmung des Oxidpulvers ermittelt werden. Liegt der pH bei etwa 7, so hat das betreffende Oxid im Sinne der Erfindung amphoteren Charakter. Beträgt der pH <7, so Liegt ein Oxid mit saurem Charakter vor, ein pH >7 zeigt ein Oxid mit basischem Charakter an. Dabei ist zu beachten, daß manche Oxide von ihrer Herstellung her oberflächlich gebundene Verunreinigungen enthalten können, die das Meßergebnis verfälschen. So weisen durch Verbrennen von Metallhalogeniden gewonnene, sogenannte pyrogene Oxide in der Regel Halogenidreste auf, die durch Hydrolyse Chlorwasserstoff bilden, der bei der pH-Messung ein Oxid mit saurem Charakter vortäuscht. Daher zeigt eine Aufschlämmung von handelsüblichem, pyrogenem Zirkondioxidpulver einen pH von ca. 3. Wäscht man das Pulver vor der Messung mit verdünntem Ammoniakwasser und spült gründlich mit Wasser nach, so beträgt der pH etwa 7. Zirkondioxid ist dementsprechend im Sinne der Erfindung ein amphoteres Oxid.

Von den Oxiden mit basischem Charakter seien z.B. Magnesiumoxid, Zinkoxid und Kupferoxid (CuO) erwähnt. Für die Erfindung geeignete Oxide mit saurem Charakter sind u.a. Siliciumdioxid, Germaniumdioxid und Bortrioxid (B₂O₃). Brauchbare Oxide mit amphoterem Charakter sind z.B. Aluminiumoxid, Zirkondioxid, Titandioxid, Hafniumdioxid und Yttriumoxid (Y₂O₃). Auch Gemische von Oxiden oder Verbindungen von Oxiden können nach der Erfindung oberflächlich hydrophobiert werden, beispielsweise Spinelle und Perowskite.

Zu den geeigneten nichtoxidischen keramischen Materialien (2) zählen insbesondere Carbide, Nitride, Boride und Silicide, die eine oxidische Oberfläche mit Hydroxidgruppen bilden. Geeignete Carbide sind kovalente Carbide, wie Siliciumcarbid und Borcarbid, sowie metallartige Carbide, wie Wolframcarbid, Titancarbid und Vanadiumcarbid. Geeignete Nitride sind u.a. kovalente Nitride, wie Bornitrid, Siliciumnitrid und Aluminiumnitrid. Von den geeigneten Boriden seien beispielsweise Aluminiumborid, Zirkonborid und Wolframborid erwähnt. Die oxidischen Oberflächen mit Hydroxidgruppen leiten sich gegebenenfalls von nur einer der Komponenten ab, die das Carbid, Nitrid, Borid oder Silicid bilden. Beispielsweise finden sich auf Siliciumcarbid SiO₂-Strukturen mit Hydroxidgruppen. Die oxidischen Oberflächen der nichtoxidischen keramischen Pulver (2) entsprechen in ihren Eigenschaften und insbesondere hinsichtlich der Hydrophobierbarkeit nach dem Verfahren der Erfindung den Oberflächen der zuvor beschriebenen entsprechenden, d.h. von demselben Oxidbildner abgeleiteten oxidischen keramischen Materialien. Alle diesbezüglichen Darlegungen gelten daher auch für die nichtoxidischen keramischen Pulver (2).

Bevorzugte keramische Pulver (1) und (2) sind feinteilig. Im Rahmen der vorliegenden Erfindung bedeutet dies, daß ihr mittlerer Teilchendurchmesser im Mikrometer- oder Nanometer-Bereich liegt. Er beträgt im allgemeinen 5 nm bis 5 µm, vorteilhaft 10 nm bis 1 µm.

### 1.2 Der hydrophobe organische Rest R

In der Formel I steht R für einen hydrophoben organischen Rest, d.h. für einen Substituenten, der ausschließlich oder weit überwiegend Kohlenwasserstoffstruktur besitzt. Er enthält zweckmäßig mindestens 6, vorteilhaft mindestens 8 und bis zu 36 Kohlenstoffatome. Bevorzugte Reste R weisen 10 bis 20 Kohlenstoffatome auf. Die hydrophoben organischen Reste R können beispielsweise gesättigte oder ungesättigte Kohlenwasserstoffstruktur aufweisen. Dann handelt es sich um Alkylreste, Cycloalkylreste, Arylreste, Arylalkylreste oder Alkylarylreste. Sie können aber auch ungesättigt, z.B. Alkenyl- oder Alkadienylreste sein. Beispiele für in Betracht kommende Reste sind Octyl, Dodecyl, Hexadecyl, Octadecyl, Tricosyl, 8-Hexadecenyl, 9-Octadecenyl, Cyclododecyl, Cyclododecenyl, Octylphenyl und Phenyldodecyl. Die Reste R können jedoch in untergeordnetem Maße auch Gruppen oder Atome enthalten, die dessen hydrophoben Charakter nicht oder nicht nennenswert beeinträchtigen und unter den Bedingungen des Hydrophobierungsverfahrens inert sind. Als Beispiele seien Etherbrücken, Sulfidbrücken und Halogenatome genannt.

### 1.3 Das Brückenglied X

Das Brückenglied X in der Formel I hat die Formel

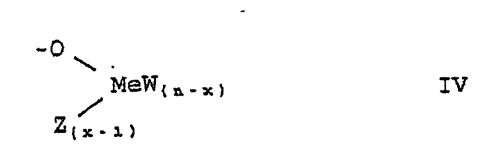

In dieser Formel bedeutet Me ein mehrwertiges, vorteilhaft 2- bis 4-wertiges Metallatom, und n dessen Wertigkeit. Als Beispiele seien Magnesium-, Beryllium-, Aluminium-, Gallium-, Zinn-, Germanium-, Silicium-, Zirkon-, Yttrium- und Hafniumatome genannt. Dabei kann Me dem Metall entsprechen, dessen Oxid die oxidische Oberfläche der keramischen Pulverteilchen bildet. Die Metalle können jedoch auch verschieden sein; beispielsweise kann eine Zirkondioxid-Oberfläche hydrophobe Reste mit Brückengliedern der Formel IV tragen, in der Me Aluminium bedeutet. In der Formel IV bezeichnet x eine ganze Zahl von 1 bis (n-1). Z kann bei mehrfachem Vorkommen gleich oder verschieden sein und steht für -O, OH oder den Rest OR', in dem R' einen organischen Rest mit 1 bis 6 Kohlenstoffatomen, insbesondere einen Alkylrest mit 1 bis 4 Kohlenstoffatomen bedeutet. W schließlich kann wiederum bei mehrfachem Vorkommen gleich oder verschieden sein und bedeutet R¹, eine die Gruppierung -O-COenthaltende Gruppierung oder eine Metall-Kohlenstoff-Bindung (zu dem Rest R in der Formel I) ; mit der Maßgabe, daß zumindest ein Substituent W eine Gruppierung -O-CO- enthält oder eine Metall-Kohlenstoff-Bindung bezeichnet. R¹ bezeichnet, falls vorhanden, einen organischen Rest, der im allgemeinen Kohlenwasserstoffstruktur mit 1 bis 36 Kohlenstoffatomen, vorteilhaft mit 1 bis 20
Kohlenstoffatomen hat.

Beispiele für hydrophobe Reste, die Brückenglieder der Formel IV enthalten, sind
-O-Zr (O-i-C₃H₇) (O-CO-C₁₅H₃₁)₂, -O-Al(O-i-C₃H₇) (O-CO-C₁₅H₃₁), -O-Al(OH)(O-CO-C₁₇H₃₅), -O-Al(O-i-C₃H₇)(O-CO-C₁₇H₃₃), -O-Al(O-CO-C₁₅H₃₁)₂, -O-Si(OH)₂(C₁₂H₂₅), (-O)₂Al(O-CO-C₁₇H₃₅), -O-Al (C₁₂H₂₅)(O-CO-C₁₇H₃₅), -O-Si(CH₃)₂(C₁₈H₃₇), -Y(i-C₃H₇)(OCOC₁₅H₃₁) und (-O)₂ Zr(O-CO-C₁₅H₃₁)₂.

### 1.4 Die Zahl der hydrophoben Reste

In der Formel I steht m für eine ganze Zahl >1, die die Anzahl der hydrophoben Reste -XR auf einem Pulverteilchen wiedergibt. Da die keramischen Pulver eine Teilchengrößenverteilung aufweisen, stellt m einen durchschnittlichen Wert dar, der sich auf die mittlere Teilchengröße bezieht. Weiterhin ist m eine elementspezifische Größe, die die unterschiedliche Neigung der verschiedenen oxidbildenden Elemente zur Ausbildung von Hydroxidgruppen auf der oxidischen Oberfläche widerspiegelt. Der Wert von m läßt sich aus der spezifischen Oberfläche des keramischen Pulvers (beispielsweise durch Laserrückwärtsstreuung zu ermitteln), dem Massegehalt des hydrophobierten keramischen Pulvers an organischem Material (beispielsweise durch thermogravimetrische Analyse zu ermitteln) und der Molmasse der hydrophobierenden Gruppen -XR berechnen. Für die Erfindung kommt es auf den genauen Wert von m nicht an. Die Formulierung "ganze Zahl >1" soll vielmehr ausdrücken, daß die keramischen Pulverteilchen eine unterschiedliche, aber sehr große Zahl von hydrophobierenden Gruppen auf der Oberfläche der Teilchen aufweisen, deren Oberflächenkonzentration im allgemeinen im Bereich von 0,5 bis 50 µmol/cm² liegt.

### 2. Die Herstellung der Pulver mit hydrophober Oberfläche

Zur Herstellung der keramischen Pulver mit hydrophober Oberfläche werden die keramischen Pulverteilchen, die eine oxidische Oberfläche mit Hydroxidgruppen aufweisen, mit einem hydrophobierenden Mittel behandelt. Die Zahl der Hydroxidgruppen pro Pulverteilchen von mittlerer Teilchengröße beträgt mindestens m, ist aber in der Regel größer, weil meistens aus sterischen oder sonstigen Gründen nicht alle vorhandenen Hydroxidgruppen mit dem Hydrophobierungsmittel reagieren. Die Menge der vorhandenen Hydroxidgruppen kann z.B. aus einer Bestimmung der aktiven Wasserstoffatome in den Hydroxidgruppen einer gegebenen Pulvermenge sowie der mittleren Teilchengröße des Pulvers berechnet werden. Die aktiven Wasserstoffatome lassen sich beispielsweise durch Einwirkung von Lithiumalanat auf das sorgfaltig von anhaftendem Wasser befreite keramische Pulver bestimmen. Die Oberflächenkonzentration der Hydroxidgruppen liegt wie die der hydrophobierenden Gruppen in den hydrophobierten keramischen Pulvern im allgemeinen im Bereich von 0,5 bis 50µmol/cm². Die üblichen für Sinterverfahren verwendeten keramischen Pulver enthalten jedenfalls eine für die mit den oben beschriebenen Vorteilen verbundene Hydrophobierung hinreichende Oberflächenkonzentration an Hydroxidgruppen.

### 2.1 Hydrophobierung mit metallhaltigen Hydrophobierungsmitteln

Die Hydrophobierung von Oxiden mit beliebiger, d.h. basischer, amphoterer oder auch saurer Oberfläche kann erreicht werden, indem man das entsprechende keramische Pulver mit einem metallhaltigen Hydrophobiermittel der Formel

(R'O)ₓMeY_{(n - x)} VI

behandelt, das auf der Pulveroberfläche hydrophobierende Reste mit einem Brückenglied IV ergibt. In der Formel VI haben Me, R', n und x die im Zusammenhang mit der Formel IV angegebene Bedeutung und steht Y für gleiche oder verschiedene Reste R¹ oder O-CO-R, wobei R¹ die im Zusammenhang mit der Formel IV angegebene Bedeutung und R die für die Formel I angegebene Bedeutung hat; mit der Maßgabe, daß das Hydrophobierungsmittel VI mindestens einen hydrophoben organischen Rest R¹ oder O-CO-R hat, in dem R¹ und R mindestens 6 Kohlenstoffatome enthalten.

Hydrohobierungsmittel der Formel VI stellt man zweckmäßig her, indem man ein Metallalkoholat oder Organometallalkoholat der Formel

R² _{y}Me(OR')_{(n-y)} VII

mit 1 bis (n-y-1) Mol Carbonsäure

R-COOH V

umsetzt. In der Formel VII haben Me sowie R' dieselben Bedeutungen, wie sie im Zusammenhang mit der Formel IV erläutert wurde, bezeichnet R² einen organischen Rest, der im allgemeinen eine Kohlenwasserstoffstruktur mit 1 bis 36 Kohlenstoffatomen, vorteilhaft mit 1 bis 18 Kohlenstoffatomen hat, und steht y für 0 oder eine ganze Zahl von 1 bis (n-y-1). R² entspricht insoweit dem Substituenten R¹, wie er im Zusammenhang mit der Formel IV erläutert wurde, steht jedoch, anders als R¹, nicht für -O-CO-R.

Man setzt die Verbindung VII mit weniger als der den Alkoxygruppen OR' entsprechenden stöchiometrischen Menge einer Carbonsäure V um, die mit einer Alkoxygruppe OR' unter Abspaltung von Alkohol und Einführung eines oder mehrerer Reste -O-CO-R in das Molekül VII reagiert. Es bleibt also mindestens eine Alkoxygruppe OR' erhalten. Die Reaktion läuft schnell ab und ist im allgemeinen nach 60 bis 100 Minuten beendet. Sie wird vorteilhaft in einem inerten Lösungsmittel, wie den zuvor beschriebenen, bei einer Temperatur zwischen 50°C und der Siedetemperatur des Lösungsmittels durchgeführt. Man erhält dabei, je nach der Wertigkeit n des Metalls Me und den molaren Mengen von VII und V, Hydrophobierungsmittel VI, in denen das Metallatom eine wechselnde Zahl von Alkoholatresten OR', organischen Resten R¹ und/oder Carbonsäureresten -OCO-R trägt.

Die in den Hydrophobierungsmitteln VI verbliebenen Alkoxygruppen OR' reagieren in Abwesenheit von Wasser ohne weiteres unter Abspaltung eines Alkoholmoleküls R'OH mit den auf der Oberfläche der Oxide, einschließlich der sauren Oxide, vorhandenen Hydroxylgruppen. Die Reaktion kann durchgeführt werden, indem man das Hydrophobierungsmittel VI, zweckmäßig als Reaktionsgemisch, wie man es durch Umsetzung des Metallalkoholats bzw. Organometallalkoholats VII mit der Carbonsäure V in einem inerten Lösungsmittel erhält, bei Temperaturen, die vorteilhaft wiederum zwischen 50°C und der Siedetemperatur des Lösungsmittels liegen, auf die Oberfläche der keramischen Pulverteilchen einwirken läßt. Diese Reaktion nimmt im allgemeinen 30 bis 180 Minuten in Anspruch.

Je nach dem speziellen Hydrophobierungsmittel und nach den sterischen Verhältnissen auf der Oberfläche der pulverförmigen Oxide mit Hydroxylgruppen auf der Oberfläche bildet sich dabei nur eine oder bilden sich mehrere chemische Bindungen zwischen einem Molekül Hydrophobierungsmittel und einem Pulverteilchen aus. Soweit noch Alkoxyreste OR' verbleiben, die keine Gelegenheit zur Reaktion mit einer Hydroxylgruppe eines Pulverteilchens haben, können diese bei der nachfolgenden Herstellung der wässerigen Dispersion (also des keramischen Schlickers) zu einer Hydroxylgruppe hydrolysieren. Dementsprechend steht in der Formel IV für das metallhaltige Brükkenglied Z für -O, -OH oder -OR'.

Bei der Hydrophobierung kann Me dem Metall entsprechen, dessen Oxid die Oberfläche der keramischen Pulverteilchen bildet. Die Metalle können aber auch verschieden sein, wie zuvor erwähnt. Beide Varianten sind, wie bereits gesagt, das Verfahren der Wahl bei keramischen Pulvern mit oxidischer Oberfläche von saurem Charakter. Aber auch keramische Pulver mit oxidischer Oberauf diese Weise hydrophobieren. Die Hydrophobierung durch einfache Acylierung erscheint auf den ersten Blick eleganter, weil sie mit den gut zugänglichen Carbonsäuren durchgeführt werden kann. Andererseits erreicht man bei Verwendung der metallhaltigen Hydrophobierungsmittel VI in manchen Fällen eine höhere Beladung der Oberflächen mit organischem Material, was unter Umständen vorteilhaft ist.

### 3. Eigenschaften der hydrophobierten keramischen Pulver

Nach dem beschriebenen Verfahren erhält man keramische Pulver mit hydrophobierter oxidischer Oberfläche, die die hydrophobierenden Reste chemisch gebunden enthalten.

Bei der Hydrophobierung mittels einer Verbindung der Formel VII dürften auf der Oberfläche u. a. Strukturen der Formeln 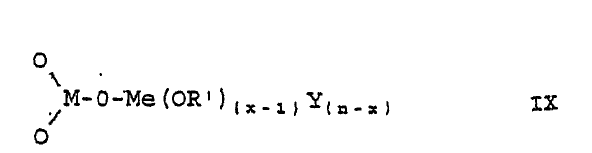 oder 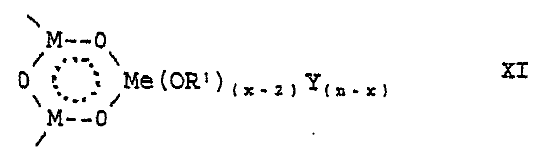 entstehen. In den Formeln IX und XI haben M, Me, R' und Y die zuvor angegebenen Bedeutungen. Wie auch immer der Mechanismus der Bindung im Einzelfall sein mag, so werden doch auf jeden Fall die Hydroxidgruppen auf der oxidischen Oberfläche der keramischen Pulver vollständig entfernt oder jedenfalls so weit maskiert, daß sie keinerlei Außenwirkung auf andere Pulverteilchen oder das umgebende Medium entfalten.

Auch das Verhalten der hydrophobierten keramischen Pulver beim Dispergieren deutet darauf hin, daß die hydrophoben Reste R über das Brückenglied X fest auf der oxidischen Oberfläche haften und die hydrophoben Kohlenwasserstoffenden von der Oberfläche weg in das umgebende Medium gerichtet sind.

### 3. Verwendung von keramischen Pulvern mit hydrophobierter Oberfläche

Keramische Pulver mit hydrophobierter Oberfläche einschließlich der keramischen Pulver mit hydrophobierter Oberfläche nach der Erfindung eignen sich insbesondere zur Herstellung von Dispersionen, die aus sehr kleinen Pulverteilchen, beispielsweise mit mittleren Teilchendurchmessern von <0,3 µm, bestehen und trotzdem einen hohen Feststoffgehalt aufweisen. Von besonderer Bedeutung ist dies für nanodisperse Keramikdispersionen mit mittleren Teilchengrößen von 5 bis 300 nm. Wenn man diese Dispersionen mit anionischen oder kationischen Dispergiermitteln stabilisiert, führt die gegenseitige Abstoßung der Teilchen durch die gleichsinnigen Coulomb'schen Kräfte zu Teilchenabständen von 50-100nm, die nur unerwünscht niedrige Feststoffgehalte einzustellen gestatten. Bei Verwendung von entsprechend feinteiligen keramischen Pulvern mit hydrophobierter Oberfläche sind die Dispersionen dagegen sterisch stabilisiert, d.h. der Abstand von Teilchen zu Teilchen wird .im wesentlichen durch die Raumerfüllung der monomolekularen Schicht aus hydrophobierenden Resten bestimmt. Es ist daher beispielsweise möglich, stabile wäßrige Al₂O₃ - oder ZrO₂-Dispersionen mit mittleren Teilchendurchmessern von 20 bis 300 nm und Feststoffgehalten von 30 bis 60 Volumenprozent herzustellen. Diese Dispersionen weisen eine für den hohen Feststoffgehalt überraschend niedrige Viskosität auf, die im allgemeinen zwischen 50 und 1.000 mPa.s liegt.

Zur Herstellung der Dispersionen fügt man dem Oxidpulver mit hydrophobierter Oberfläche die erforderliche Menge Wasser sowie zweckmäßig ein nichtionisches Tensid zu und setzt das Gemisch Scherkräften aus. Das kann z.B. in einem Rührgefäß, einem Kneter oder einer Kugelmühle geschehen. In manchen Fällen empfiehlt es sich, eine gegenüber dem Wasser untergeordnete Menge eine wasserlöslichen organischen Lösungsmittels, wie n-Octanol, Ethanol, i-Propanol, n-Butanol oder Acetylaceton, mitzuverwenden.

Ein überraschender Vorteil der Hydrophobierung nach der Erfindung besteht darin, daß sich Oxide verschiedenen Ursprungs und mit verschiedener Vorgeschichte, die auch bei praktisch gleichen makroskopischen Daten bei der Verarbeitung zu Mikro- oder Nanodispersionen deutliche Eigenschaftsunterschiede zeigen können, nach der Hydrophobierung praktisch gleich verhalten. Das erleichtert die Prozeßführung bei der Weiterverarbeitung und führt zu gut reproduzierbaren Eigenschaften der hergestellten Sinterkörper.

Die Dispersionen werden in üblicher Weise verarbeitet. Werden Sinterkörper aus ihnen hergestellt, so führt der Gehalt an organischem Material, der von der Hydrophobierung herrührt und, je nach Feinheit des Oxidpulvers, bis zu einigen Gewichtsprozent betragen kann, zu keinen besonderen Problemen. Das organische Material wird vielmehr, genau wie die in der Sintertechnik vielfach eingesetzten organischen Plastifizier- und Bindemittel, bei vorsichtigem Erhitzen in sauerstoffhaltiger Atmosphäre auf Temperaturen von 150 bis 400°C praktisch vollständig entfernt.

Die folgenden Beispiele sollen die Erfindung erläutern, aber in keiner Weise begrenzen.

### Beispiel 1 - Hydrophobierung von ZrO₂ mit einem Metallalkoholat-carboxylat

### 1.1 Herstellung von Aluminiumisopropylat-carboxylat

9g (0,05 mol) Aluminiumtriisopropylat werden in 100 ml Toluol gelöst. 0.1 mol Palmitinsäure werden unter leichtem Erwärmen ebenfalls in Toluol gelöst. Die Lösung wird unter Rühren und Erwärmen zu der Lösung des Aluminiumtriisopropylats getropft. Danach wird das Gemisch 5 Stunden am Rückfluß erhitzt, wobei das entstehende Isopropanol abdestilliert wird. Es entsteht Aluminiumsopropylat-dipalmitat mit der Formel (C₃H₇O)Al(OCO-C₁₅H₃₁)₂.

### 1.2 Herstellung von Zirkonisopropylat-palmitat

Die Herstellung erfolgt analog der Herstellung des Aluminiumpropylat-palmitats nach Ziffer 1.1, wobei 10 g (0,05 mol) Zirkontetraisopropylat eingesetzt werden. Es entsteht Zirkondiisopropylat-dipalmitat, (i-C₃H₇O)₂Zr(OCO-C₁₅R₃₁)₂

### 1.3 Hydrophobierung von ZrO₂

Ausgangsprodukt ist ein keramisches ZrO₂-Pulver mit einer spezifischen Obefläche von 50 m²/g. Die Teilchengrößen, bestimmt durch Laserrückwärtsstreuung, liegen im Bereich von 80 bis 250 nm, mit einem Mittelwert von 140 nm. Die Volumina der Hydrophobierungsmittel nach den Ziffern 1.1 und 1.2 werden durch Zusatz von weiterem Toluol auf jeweils 1.000 ml erhöht. In beide Lösungen werden jeweils 0,8 mol ZrO₂ eingebracht. Die Gemische werden jeweils etwa 3 Stunden am Rückfluß erhitzt, wobei das entstehende Isopropanol abdestilliert. Nach beendeter Reaktion wird das hydrophobierte keramische ZrO₂ - Pulver abzentrifugiert, in Toluol aufgeschlämmt, erneut abzentrifugiert und im Vakuumtrockenschrank bei 90°C bis zur Massekonstanz getrocknet. Der Anteil des organischen Materials beträgt nach thermogravimetrischer Analyse 7,5 Masse-%.

### Beispiel 2 - Herstellung von wäßrigen keramischen Schlickern

### 2.1 Schlicker aus unmodifiziertem ZrO₂

Das im Beispiel 1 eingesetzte unmodifizierte, handelsübliche ZrO₂ -Pulver läßt sich ohne Zusatz von Dispergiermitteln nur bis zu einem Feststoffgehalt von 18 Vol.-% in Wasser einbringen. Werden dem Wasser vor der Pulverzugabe 5 Masse-%, bezogen auf das Pulver, Acetylaceton zugesetzt, so kann der Feststoffgehalt auf 21 Vol-% erhöht werden. Die Schlicker werden hergestellt, indem dem vorgelegten Wasser bzw. dem Gemisch aus Wasser und Acetylaceton sukzessive und unter Rühren das Pulver zugegeben wird. Versucht man, den Feststoffgehalt über die angegebenen Werte hinaus zu erhöhen, so tritt eine Gelierung ein, und der Schlicker wird steif.

### 2.2 Schlicker aus hydrophobiertem ZrO₂

Bei Verwendung von hydrophobierten keramischen Pulvern gemäß dem Beispiel 1 kann der Feststoffgehalt des keramischen Schlickers auf 38 Vol.-% erhöht werden. 10,9 g Pulver werden sukzessive in 5 ml Wasser, die 0,6g eines nichtionischen Tensids mit einem HLB-Wert (hydrophilic-lyophilic balance) zwischen 12 und 15 und 0,3 g Isopropanol als Co-Tensid enthalten, eingerührt. Es entsteht ein dünnflüssiger, zum Gießen geeigneter Schlicker. Die Teilchengrößenverteilung, ermittelt durch Laserrückwärtsstreuung, ist gegenüber dem Ausgangspulver unverändert.

### Beispiele 3 - Herstellung von hydrophobiertem SiC

Das Ausgangspulver hat eine spezifische Oberfläche von 40,3 m²/g und eine mittlere Teilchengröße von 200 nm. In einem Dreihalskolben werden 2.000 ml Toluol und 97 g Octadecyltrimethoxysilan (OTS) vorgelegt und mittels eines Flügelruhrers gemischt. Das Gemisch wird am Rückfluß erhitzt, und 722 g des SiC-Pulvers werden nach und nach zugegeben. Das bei der Reaktion des OTS mit den Hydroxylgruppen auf der oxidischen Oberfläche des SiC-Pulvers entstehende Methanol wird aufgefangen und abgezogen. Nach 5 Stunden ist die Reaktion beendet. Das Reaktionsgemisch wird in noch heißem Zustand durch eine 4er-Fritte filtriert, um Pulver und Lösungsmittel zu trennen. Das Pulver wird auf der Fritte mit insgesamt 1.000 ml Toluol gewaschen, über Nacht im Trockenschrank getrocknet, von Hand in einer Reibschale vorgemörsert und anschließend durch ein 160 µm-Sieb gesiebt. Die eingesetzte OTS-Menge ist so berechnet, daß für jede Hydroxidgruppe auf der Oberfläche (8,9 µmol/cm²) genau ein Molekül OTS zur Verfügung steht.

## Patentansprüche

1. Keramische Pulver mit hydrophobierter Oberfläche, die aus Teilchen bestehen, die der allgemeinen Formel
P-(XR)ₘ (I)
entsprechen, in der P ein keramisches Pulverteilchen bedeutet, R für einen hydrophoben organischen Rest mit 6 bis 36 Kohlenstoffatomen steht, X ein Brückenglied bedeutet und m eine ganze Zahl größer 1 ist, **dadurch gekennzeichnet, daß** das Brückenglied X ein metallhaltiger Rest der Formel 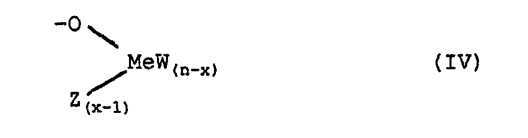 ist, in der Me ein mehrwertiges Metallatom und n dessen Wertigkeit bedeutet, x eine ganze Zahl von 1 bis (n-1) bezeichnet, Z bei mehrfachem Vorkommen gleich oder verschieden sein kann und für -O, OH oder den Rest OR' steht, wobei R' für einen organischen Rest mit 1 bis 6 Kohlenstoffatomen steht, W bei mehrfachem Vorkommen gleich oder verschieden sein kann und für eine organische Kohlenwasserstoffstruktur mit 1 bis 36 Kohlenstoffatomen, eine die Gruppierung -O-CO- enthaltende Gruppierung oder eine Metall-Kohlenstoffbindung steht, mit der Maßgabe, daß zumindest ein Substituent W eine Gruppierung -O-CO- enthält oder eine Metall-Kohlenstoff-Bindung zu dem Rest R in der Formel I bezeichnet.

2. Keramisches Pulver nach Anspruch 1, **dadurch gekennzeichnet, daß** das Metallatom Me einem der Hauptbestandteile des keramischen Pulvers entspricht.

3. Keramisches Pulver nach Anspruch 1, **dadurch gekennzeichnet, daß** das Metallatom Me von den Hauptbestandteilen des keramischen Pulvers verschieden ist.

4. Verfahren zur Herstellung von keramischen Pulvern mit hydrophobierter Oberfläche, **dadurch gekennzeichnet, daß** keramische Pulverteilchen mit saurem, basischem oder amphoterem Charakter und Hydroxidgruppen auf der Oberfläche mit einem Hydrophobierungsmittel der Formel
(R'O)ₓ MeY_{(n - x)} (VI)
zur Reaktion gebracht werden, in der Me, R', n und x die in Anspruch 1 angegebene Bedeutung haben; Y für gleiche oder verschiedene Reste R¹ oder O-CO-R steht, wobei R die in Anspruch 1 angegebene Bedeutung und R¹ für einen organischen Rest steht, mit der Maßgabe, daß das Hydrophobierungsmittel mindestens einen hydrophoben organischen Rest R¹ oder R enthält.

5. Verfahren nach Anspruch 4, **dadurch gekennzeichnet, daß** das keramische Ausgangspulver aus Zirkondioxid besteht, Me für Aluminium bzw. Zirkon und n für 3 bzw. 4 steht, R' einen Alkylrest mit 1 bis 4 Kohlenstoffatomen bedeutet und Y für einen O-CO-R steht, in dem R einen Kohlenwasserstoffrest mit 10 bis 20 Kohlenstoffatomen bezeichnet.

6. Verfahren nach Anspruch 4, **dadurch gekennzeichnet, daß** das keramische Ausgangspulver aus Siliziumcarbid besteht, Me für Silizium und n für 4 steht, R' einen Alkylrest mit 1 bis 4 Kohlenstoffatomen bedeutet und Y einen Rest R¹ mit Kohlenwasserstoffstruktur und 10 bis 20 Kohlenstoffatomen bezeichnet.

7. Verwendung von keramischen Pulvern mit hydrophobierter Oberfläche nach mindestens einem der Ansprüche 1 bis 3 zur Herstellung von Dispersionen mit einer mittleren Teilchengröße im Mikrometer- und Nanometerbereich und mit hohem Feststoffgehalt.

## Claims

1. Ceramic powders having a hydrophobicized surface, which comprise particles which correspond to the general formula
P-(XR)ₘ (I)
where P is a ceramic powder particle, R is a hydrophobic organic radical having from 6 to 36 carbon atoms, X is a bridging group and m is an integer greater than 1, **characterized in that** the bridging group X is a metal-containing radical of the formula 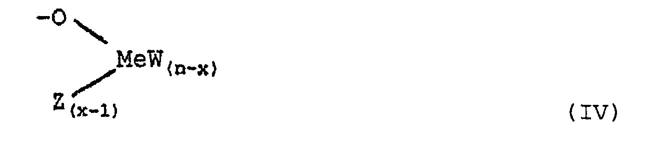 where Me is a polyvalent metal atom and n is its valency, x is an integer from 1 to (n-1), Z may be identical or different in the case of multiple occurrence and is -O, OH or the radical OR', where R' is an organic radical having from 1 to 6 carbon atoms, W may be identical or different in the case of multiple occurrence and is an organic hydrocarbon structure having from 1 to 36 carbon atoms, a group containing the group -O-CO- or a metal-carbon bond, with the proviso that at least one substituent W contains a group -O-CO- or is a metal-carbon bond to the radical R in the formula I.

2. Ceramic powder according to Claim 1, **characterized in that** the metal atom Me corresponds to one of the main constituents of the ceramic powder.

3. Ceramic powder according to Claim 1, **characterized in that** the metal atom Me is different from the main constituents of the ceramic powder.

4. Process for preparing ceramic powders having a hydrophobicized surface, **characterized in that** ceramic powder particles having acidic, basic or amphoteric character and hydroxide groups on the surface are reacted with a hydrophobicizing agent of the formula
(R'O)ₓ MeY₍ₙ₋ₓ₎ (VI)
where Me, R', n and x are as defined in Claim 1; Y is identical or different radicals R¹ or O-CO-R, where R is as defined in Claim 1 and R¹ is an organic radical, with the proviso that the hydrophobicizing agent contains at least one hydrophobic organic radical R¹ or R.

5. Process according to Claim 4, **characterized in that** the ceramic starting powder comprises zirconium dioxide, Me is aluminium or zirconium and n is 3 or 4, R' is an alkyl radical having from 1 to 4 carbon atoms and Y is an O-CO-R in which R is a hydrocarbon radical having from 10 to 20 carbon atoms.

6. Process according to Claim 4, **characterized in that** the ceramic starting powder comprises silicon carbide, Me is silicon and n is 4, R' is an alkyl radical having from 1 to 4 carbon atoms and Y is a radical R¹ having a hydrocarbon structure and from 10 to 20 carbon atoms.

7. Use of ceramic powders having a hydrophobicized surface according to at least one of Claims 1 to 3 for preparing dispersions having a mean particle size in the micron and nanometer range and having a high solids content.

## Revendications

1. Poudres céramiques ayant des surfaces rendues hydrophobes qui consistent en des particules qui correspondent à la formule générale :
P- (XR)ₘ (I)
dans laquelle P signifie des particules de poudres céramiques, R un reste organique hydrophobe ayant de 6 à 36 atomes de carbone, X un élément de pontage, et m est un nombre entier à 1,
**caractérisées en ce que**
l'élément de pontage X est un reste contenant un métal de formule : 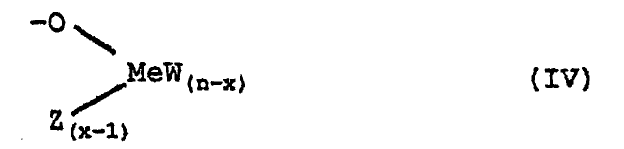 dans laquelle Me signifie un atome métal plurivalent et n signifie sa valence, x désigne un nombre entier allant de 1 à (n-1), Z peut être dans de nombreuses occasions identique ou différent et représente -O, OH ou le reste OR' dans lequel R' représente un reste organique ayant de 1 à 6 atomes de carbone, W dans de nombreuses occasions peut être identique ou différent et représente une structure hydrocarbonée organique ayant de 1 à 36 atomes de carbone, un groupement contenant le groupement -O-CO ou une liaison métal-carbone avec la restriction qu'au moins un substituant W renferme un groupement-O-CO ou désigne une liaison métal-carbone, pour le reste R dans la formule I.

2. Poudre céramique selon la revendication 1,
**caractérisée en ce que**
l'atome de métal Me correspond à un des constituants principaux de la poudre céramique.

3. Poudre céramique selon la revendication 1,
**caractérisée en ce que**
l'atome de métal Me est différent des constituants principaux de la poudre céramique.

4. Procédé de préparation de poudres céramiques ayant des surfaces rendues hydrophobes,
**caractérisé en ce qu'**
on met en réaction des particules de poudre céramique ayant un caractère acide, basique ou amphotère et des groupes hydroxyde sur les surfaces avec un agent d'hydrophobisation de formule :
(R'O)ₓMeY₍ₙ₋ₓ₎ VI
dans laquelle Me, R', n et x ont la signification indiquée à la revendication 1, Y représente des restes R¹ identiques ou différents ou O-CO-R dans laquelle R a la signification indiquée pour la revendication 1, et R¹ représente un reste organique avec la restriction que l'agent d'hydrophobisation renferme au moins un reste organique hydrophobe R¹ ou R.

5. Procédé selon la revendication 4,
**caractérisé en ce que**
la poudre de départ céramique consiste en du dioxyde de zirconium, Me représente de l'aluminium, ou du zirconium et n représente 3 ou 4 ; R' signifie un reste alkyle ayant de 1 à 4 atomes de carbone et Y représente un reste O-CO-R dans lequel R désigne un reste hydrocarboné ayant de 10 à 20 atomes de carbone.

6. Procédé selon la revendication 4,
**caractérisé en ce que**
la poudre de départ céramique consiste en du carbure de silicium, Me représente du silicium et n représente 4, R' signifie un reste alkyle ayant de 1 à 4 atomes de carbone et Y désigne un reste R¹ ayant une structure hydrocarbonée et de 10 à 20 atomes de carbone.

7. Utilisation de poudres céramiques ayant des surfaces rendues hydrophobes, selon au moins une des revendications 1 à 3, pour la préparation de dispersions ayant une taille de particules moyenne dans la zone du micromètre et du nanomètre, et ayant une teneur élevée en matières solides.
